# EUROPÄISCHE PATENTSCHRIFT

(11) **EP 0 417 793 B1**
(45) Veröffentlichungstag und Bekanntmachung des Hinweises auf die Patenterteilung: **22.09.1993**
(21) Anmeldenummer: 90117673.5
(22) Anmeldetag: 13.09.1990
(51) Int. Cl.: B65B 25/16, A21D 15/00

(54) **Verfahren zum Verpacken fester Lebensmittel und Verpackung**
Method for packaging solid foodstuffs and packaging thereof
Procédé d'emballage de produits alimentaires stables et leur emballage

(30) Priorität: 14.09.1989 DE 3930784
(43) Veröffentlichungstag der Anmeldung: 20.03.1991
(73) Patentinhaber: H. Bahlsen Keksfabrik KG, D-30163 Hannover (DE)
(72) Erfinder: Kuhn, Heinz-Georg, D-3003 Ronnenberg (DE)
(74) Vertreter: Vonnemann, Gerhard, Dr.-Ing.

(56) Entgegenhaltungen:
- US-A- 2 758 932

## Beschreibung

Die Erfindung betrifft ein Verfahren zum Verpacken fester Lebensmittel mit verbesserter Qualität und Haltbarkeit unter Ausnutzung einer Reaktion zwischen Glucose und Oxidase, insbesondere zum Verpacken von Backwaren, sowie ein Verpackungsmaterial, das zur Aufnahme eines Reaktionssystems aus den Komponenten Glucose und Oxidase vorgesehen ist.

Für Produkte der Lebensmittelindustrie und hier vor allem im Bereich der Backwaren- und Kuchenherstellung spielt eine verlängerte Haltbarkeit ohne Einbuße von Qualitätsmerkmalen und hier besonderes von sensorischen Merkmalen eine immer wichtiger werdende Rolle. Der Lebensmittelhandel verlangt eine immer weitergehende Haltbarkeit bei einer möglichst geringen Menge an Zusatzstoffen, im Idealfall einem völligen Fehlen jeglicher Zusatzstoffe. Dieses Ziel wird zum heutigen Zeitpunkt mit verschiedenen chemischen und physikalischen Veränderungen der Lebensmittel erreicht. Hierbei spielen physikalische Verfahren, wie z.B. Wassergehaltsverringerung, kurzzeitiges Erhitzen oder das Spülen gasdichter Packungen mit den Inertgasen bei Produkten hohen Qualitätsstandards eine überragende Rolle.

Nachteilig an den bekannten Verfahren ist, daß beim Absenken des Wasserwertes der sensorische Eindruck beim Verzehren des Lebensmittels einer Veränderung unterliegt. So muß der Eindruck eines feuchten Lebensmittels durch lebensmittelrechtlich zugelassene Stoffe anderer Art erreicht werden.

Bei einer CO₂-Spülung muß mit hohen Verlusten von CO₂ gerechnet werden. Die dadurch entstehenden Kosten belasten das Betriebsergebnis entsprechend. Dazu muß noch mit einer leichten Beeinflussung des Geschmacks durch gelöstes Kohlendioxid gerechnet werden.

Aus US-A-2,758,932 ist eine Verpackung bekannt bei der in die Verpackung ein Glucose Oxidase-System gebracht wird, das von einer wasserdampfundurchlässigen aber sauerstoffdurchlässigen Schicht umhüllt ist. Als nachteilig wird erkannt, daß daß System nur begrenzt lagerfähig ist, so daß das Glukose-Oxidase-System unmittelbar vor dem Verpacken eingebracht werden muß, weil es innerhalb kurzer Zeit seine Wirkung verliert. Dieser Nachteil verhindert die Anwendung für die Masse der Fälle, bei denen beispielsweise im Handel frische Ware verpackt wird und keine maschinellen Einrichtungen zur Verfügung stehen, um das System in geeigneter Mischung herzustellen und in der erforderlichen Dosierung in Folienbeutel abzupacken. Da die Reagenzien für die Schicht jedoch aufwendig zu fertigen und nur zu hohen Preisen zu beschaffen sind, können die Vorteile des Verfahrens nur dann realisiert werden, wenn das in US-A-2,758,932 erkannte Problem, nämlich eine verbesserte Lagerfähigkeit bei leichter und präziser Dosierung gelöst ist.

Diese bekannte Methode findet vor allem bei Backwaren und Kuchen deshalb schon keine Akzeptanz beim Verbraucher, da die Beipackbeutel zur Verunsicherung Anlaß geben.

Das bedeutet, daß aus Verbrauchersicht die bekannten Methoden nicht voll den Erwartungen entsprechen, da sie z.B. einen zu trockenen Eindruck des Lebensmittels hervorrufen oder ein zur Haltbarkeit erforderlicher hoher Fettgehalt mit seinen ernährungsphysiologischen Konsequenzen nicht wünschenswert ist. Die lebensmittelrechtlich zugelassenen Stoffe anderer Art, die durch Beimischen zur Verlängerung der Haltbarkeit dienen, begegnen immer größerem Mißtrauen.

Aufgabe der Erfindung ist es deshalb, ein Verfahren der gattungsbildenden Art anzugeben, daß die Nachteile der bekannten Verfahren vermeidet. Insbesondere soll ermöglicht werden, daß Lebensmittel mit höheren Feuchtegehalten, was speziell bei Backwaren von Bedeutung ist, abgepackt werden können oder die Feuchtigkeit des Lebensmittels über längere Zeiträume gezielt eingestellt werden kann. Desweiteren ist es Aufgabe der Erfindung, die erforderlichen Mengen von Zusatzstoffen zur Haltbarmachung verpackter Lebensmittel zu verringern. Nicht zuletzt sollen durch auch die Kosten der bekannten Verfahren zur Haltbarmachung der Lebensmittel verringert werden. Schließlich besteht auch die Aufgabe darin, ein Verpackungsmaterial anzugeben, das zur Verwendung beim erfindungsgemäßen Verfahren geeignet ist.

Diese Aufgabe wird durch die Merkmale des Patentanspruchs 1 gelöst. Dadurch wird vorteilhaft die Empfindlichkeit des Lebensmittels gegenüber aeroben Mikroorganismen, insbesondere Schimmelpilzen, verringert. Der Sauerstoffentzug erfolgt vorteilhaft langsam und kontinuierlich. Dieses ist insbesondere bei Backwaren oder anderen Lebensmitteln mit großen Porenvolumina von Bedeutung, da aus diesen Lebensmitteln auch über längere Zeiträume weiter Sauerstoff in das Volumen der Verpackung diffundiert. Besonders überraschend ist, daß, obwohl Gemische von Glucose und Oxidase nur über wenige Stunden stabil sein sollen, die Haltbarkeit über mehrere Wochen hinaus ausgedehnt werden konnte.

Vorzugsweise wird die genauer zu dosierende und/oder kostenintensivere Komponenete zuerst aufgebracht. So kann ein Überdosieren vermieden werden.

In Ausgestaltung des Verfahrens ist vorgesehen, daß das Verpacken zusätzlich in Anwesenheit eines Inertgases, vorzugsweise von Stickstoff und Kohlendioxid als Schutzgas, erfolgt. Bei einer Kombination von Schutzgasspülung und Aufbringen einer Mischung von Glucose und Oxidase auf die Innenseite der Verpackung können die Verfahrenskosten optimiert werden. Zum einen kann der notwendige Aufwand an teurem Enzym verringert werden, als auch der notwendige Überschuß an Spülgas soweit reduziert werden, daß sich in Bezug auf die Haltbarkeit und Qualität der verpackten Ware güngstigere Betriebskosten ergeben, und sich die Möglichkeit der Entwicklung ganz neuer Produkte ergibt.

In weiterer Ausgestaltung der Erfindung ist vorgesehen, daß das Aufbringen der ersten Komponente als Schicht, vorzugsweise durch Aufsprühen einer Trägerflüssigkeit auf einen mechanischen Träger oder direkt in die Verpackung erfolgt. Die zweite Komponente kann dann kurzfristig vor dem Verpacken entweder ebenfalls in einer Schicht gebunden auf die erste aufgebracht oder vorzugsweise mit einer Pufferlösung aufgesprüht werden. Hierdurch werden die Betriebskosten weiter vorteilhaft verringert, da zwischen Aufbringen der Schicht und dem Verpacken nur ein geringer Aktivitätsverlust des Enzyms auftritt, so daß Enzym gespart werden kann. Durch die entsprechende Auswahl der Pufferlösung kann die Aktivität des Enzyms auf die Empfindlichkeit des zu verpackenden Lebensmittels sowie auf die erwünschte Haltbarkeit eingestellt werden.

In weiterer Ausgestaltung der Erfindung ist vorgesehen, daß eine Mischung von Glucose und Oxidase im Gewichtsverhältnis größer 1:1, bevorzugt im Verhältnis 2:1 vorliegt. Diese Dosierung hat sich in Versuchen als besonders vorteilhaft herausgestellt, da nachgewiesen werden konnte, daß sich der Sauerstoffabbau in der Verpackungsatmosphäre über mehr als 100 Stunden nachweisen läßt. Der Abbau vollzieht sich dabei auf überraschend geringe Sauerstoffkonzentrationen. Auch bei höheren Feuchtigkeitsgehalten des Lebensmittels wird eine Haltbarkeit von mehr als zehn Wochen ermöglicht.

In weiterer Ausgestaltung der Erfindung ist vorgesehen, daß das Aufbringen zusammen mit einer Pufferlösung mit einem ph-Wert zwischen 4 und 7,5, vorzugsweise unter Verwendung eines Azetat-Puffers, erfolgt. Dieser ph-Wert-Bereich hat sich für die Aktivität der verwendeten Enzyme als besonders güngstig erwiesen.

In weiterer Ausgestaltung der Erfindung ist vorgesehen, daß auf die Innenseite der Verpackung 4 bis 8 mg pro 100 ml Verpackungsvolumen an Gesamtgewicht von Glucose und Oxidase dosiert aufgebracht wird, insbesondere zwischen 5 und 7 mg pro 100 ml. Mit dieser Dosierung wurden besonders gute Haltbarkeiten erreicht, wobei die Streuung der erreichten O₂-Konzentrationen in der Verpackungsatmosphäre auch nach längeren Zeitraümen vorteilhaft gering lag.

In weiterer Ausgestaltung der Erfindung ist vorgesehen, daß die Backwaren mit einer Eigentemperatur zwischen 25 und 35°C verpackt werden und danach auf Umgebungstemperatur abkühlen. Lebensmittel und insbesondere Backwaren werden nach einer Abkühlung von Produktionstemperatur auf etwa 30°C, wobei die Temperatur dann bei der anschließenden Lagerung auf 10°C bis 20°C abfällt, abgepackt. Gerade in diesen Temperaturbereich liegt vorteilhaft das Temperaturoptimum der Glucose-Oxidase, so daß zunächst ein rascher Sauerstoffabbau erfolgt.

In weiterer Ausgestaltung der Erfindung ist vorgesehen, daß die Backwaren mit einer Restfeuchte verpackt werden, die in der Atmosphäre der Verpackung ein Feuchtegleichgewicht von größer als 70% relativer Feuchte einstellt. Dieser Bereich hat sich besonders vorteilhaft für die Aktivität der Enzyme herausgestellt. Innerhalb einer Zeit von drei bis vier Wochen wurde der Sauerstoffgehalt in flexiblen Verpackungen auf Werte von unter 1% gesenkt. Durch den erfindungsgemäßen erhöhten Feuchtigkeitsgehalt, wird der sensorische Eindruck des verzehrten Lebensmittels vorteilhaft verbessert.

In weiterer Ausgestaltung der Erfindung ist vorgesehen, daß als Substrat Glucosesyrup, bevorzugt mit einer β-D-Glucose verwendet wird. Unter dem Gesichtspunkt der Kostenoptimierung, hat sich Glucosesirup als besonders vorteilhaft erwiesen. Die Aktivität der verwendeten Enzyme konnte dadurch auch über den verlängerten Haltbarkeitszeitraum nachgewiesen werden.

In weiterer Ausgestaltung der Erfindung ist vorgesehen, daß als Oxidase Enzyme des Aspergillus-niger verwendet werden. Diese Enzyme sind kostengünstig erhältlich, so daß sich dadurch insgesamt akzeptable Betriebskosten ergeben.

In weiterer Ausgestaltung der Erfindung ist vorgesehen, daß als Trägerflüssigkeit in der das Gemisch eingebracht ist ein schichtenbildendes Dickungsmittel, vorzugsweise ein Alginat verwendet wird. Durch die dadurch verbesserte Haftung auf der Verpackung, wird vorteilhaft vermieden, daß Teile der Schicht auf das verpackte Lebensmittel übertragen werden. Darüberhinaus kann durch die Wahl des verwendeten Dickungsmittells vorteilhaft auf die Diffusionsvorgänge innerhalb der Schicht Einfluß genommen werden, so daß ein weiteres Mittel zur Steuerung der Aktivität des Glukose-Oxidasegemisches zur Verfügung steht.

In weiterer Ausgestaltung der Erfindung ist vorgesehen, daß im Dichtungsmittel ein Feuchtigkeitsgehalt eingestellt wird, der den Einsatz auch bei trockenen Lebensmitteln erlaubt. Aw-Werte von ca. 0,6 in der Verpackung haben sich als besonders vorteilhaft erwiesen.

In weiterer Ausgestaltung der Erfindung ist vorgesehen, daß in die Schicht ein Anteil an Carbonaten eingebracht wird. Die bei der Reaktion entstehende Glucosesäure führt durch die Zugabe der Carbonate zur Freisetzung von CO₂ und bewirkt damit zusätzlich eine Pufferung des Systems. Außerdem kann ganz oder teilweise auf ein sonst möglicherweise erforderliches Inertgas beim Verpacken verzichtet werden.

Gegenstand der Erfindung ist darüber hinaus ein Verpackungsmaterial, das zur Aufnahme eines Reaktionssystems aus den Komponenten Glucose und Oxidose vorgesehen ist, wobei es nur eine Komponente des Reaktionssystems als Schicht aufweist. Die zur Reaktion erforderliche zweite Komponente kann beispielsweise durch Aufsprühen auf die erste Schicht oder als zweite Schicht auf einem zweiten Träger unmittelbar vor dem Verpacken hinzugefügt werden. Die Verpackung läßt sich mit nur einer, so nicht reaktionsfähigen, Komponente versehen länger bevorraten. Ein in diese Verpackung eingebrachtes Lebensmittel weist eine Haltbarkeit von über zehn Wochen auf. Es benötigt vorteilhaft geringere Mengen an haltbarkeitfördernden Inhaltsstoffen und hinterläßt außerdem einen besseren sensorischen Eindruck.

Weitere vorteilhafte Ausgestaltungen des verpackten Lebensmittels sind den Unteransprüchen 9 bis 12 zu entnehmen. Insbesondere kann durch die Anwesenheit eines Indikators, das Erreichen der Haltbarkeitsgrenze durch Farbwechsel angezeigt werden. Die Überprüfung der Lebensmittel wird dadurch vorteilhaft erleichtert.

Das Verfahren wird anhand zweier Diagramme erläutert. Es zeigen:

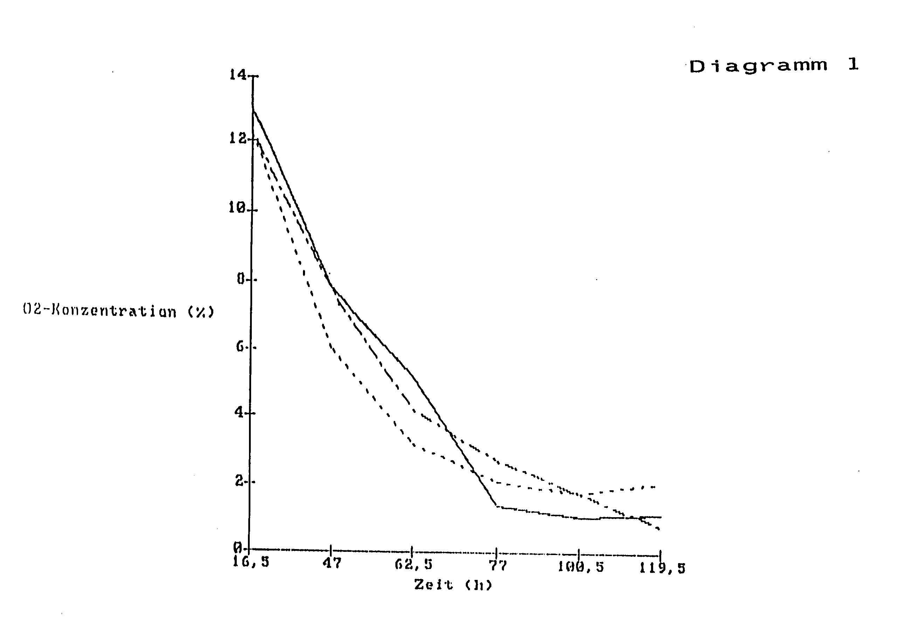

- Diagramm 1:: den Abbau des Sauerstoffs in der Verpackungsatmosphäre über des Zeit und
- Diagramm 2:: den Einfluß des dosierten Glucose-Oxidasesystems.

Durch Aufsprühen einer wässrigen Lösung, in der Glukose-Oxidase im Verhältnis 2:1 gelöst war, wurde in einer festen Verpackung innen eine Schicht aufgebracht und die Verpackung geschlossen. Die Atmosphäre innerhalb der Verpackung wurde danach zu verschiedenen Zeitpunkten auf Anwesenheit von Sauerstoff untersucht. Dabei ergab sich ein rascher Abbau der Sauerstoffkonzentration auf 12 bis 13% nach 16,5 Stunden. Auch über diesen Zeitpunkt hinaus erfolgte ein weiterer Sauerstoffabbau, der nach etwa 100 Stunden den Wert von etwa 2% Sauerstoff in der Verpackungsatmosphäre erreichte. Somit konnte nachgewiesen werden, daß das Glucose-Oxidasesystem überraschenderweise auch über einen Zeitraum von mehr als 100 Stunden noch wirksam war.

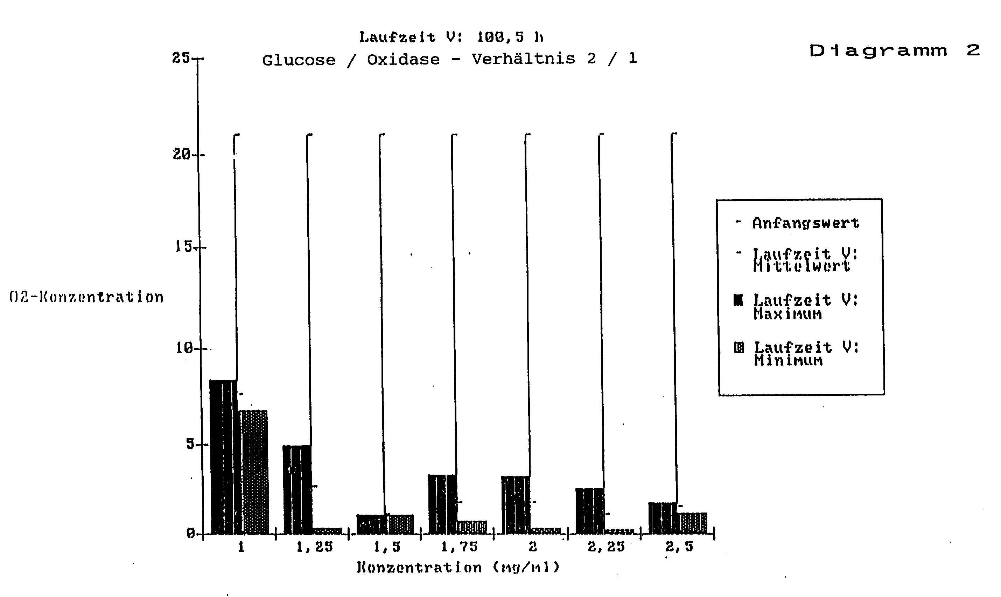

Die Streuung der Sauerstoffkonzentration in der Testverpackung bei unterschiedlicher Dosierung des Glukose-Oxidasegemisches mit einem Gewichtsverhältnis von 2:1 ist in Diagramm 2 dargestellt. danach ergeben sich besonders geringe Sauerstoffkonzentrationen nach gleicher Zeitdauer von 100,5 Stunden bei einer Dosierung des Glukose-Oxidasesystems von 1,5 mg pro 100 ml Luftvolumen. Die festgestellten Streuungen der Sauerstoffkonzentration sind bei dieser Dosierung am geringsten. Eine Dosierung oberhalb dieses Wertes ergibt keine wesentlichen Verringerungen der Sauerstoffkonzentration. Dosierungen unterhalb dieses Wertes jedoch ergeben höhere Sauerstoffkonzentrationen.

Im beschriebenen Beispiel wurde als eine Ausführungsmöglichkeit die folgende Zusammensetzung und Auftragstechnik pro 100 ml zu entfernende Luftmenge aus der Verpackung gewählt,

Glucose-Oxidase 10 - 40 Einheiten, vorzugsweise 20 der gewählten Oxidase mit 11.000 Units; 200 - 400 Einheiten Glucose; 200 - 600 Einheiten Pufferlösung; 2 - 8 Einheiten Alginat; 0 - 3 Einheiten oberflächenaktive Substanz.

Die Rezeptur wurde durch den Puffer im optimalen pH-Bereich, vorzugsweise 5,5 bis 6,5 gehalten.

Das nach dieser Rezeptur hergestellte transparente Reaktionsgemisch wurde im Beispielsfalle mittels Streichtechnik in ca. 100 µm dicker Schicht auf die Innenseite des Verpackungsmaterials außerhalb der Verschlußzonen (z.B. Siegelbereiche) aufgetragen.

Die Diagramme zeigen, daß durch das erfindungsgemäße Verfahren auch über längere Zeiträume hinaus ein Sauerstoffabbau in der Verpackungsatmosphäre erfolgt. Die Haltbarkeit verpackter Lebensmittel wird dadurch auf über zehn Wochen erhöht. Insbesondere Backwaren konnten, auch bei einem vorteilhaft höheren Wassergehalt über längere Zeit vor Schimmelbefall geschützt werden. Im Lebensmittel selbst enthaltener Sauersoff, der über den Haltbarkeitszeitraum in die Verpackungsatmosphäre hineindiffundiert, wirkt sich nicht nachteilig aus. Chemische Konservierungsmittel im Lebensmittel werden weitgehend überflüssig. Die Erfindung ermöglicht es, ohne umweltbelastende Einflüsse unter Einhaltung der lebensmittelrechtlichen Bestimmungen neue marktfähige Produkte zu entwickeln.

Vergleichbare Ergebnisse erhielt man bei Verwendung einer Verpackung mit einer schichtförmig aufgetragenen Reaktionskomponente, auf die erst unmittelbar vor dem Verschließen eine Lösung der zweiten Reaktionskomponente als Lösung aufgesprüht wurde.

## Patentansprüche

1. Verfahren zum Verpacken fester Lebensmittel mit verbesserter Haltbarkeit und Qualität unter Ausnutzung einer Reaktion zwischen den Komponenten Glucose und Oxidase, insbesondere zum Verpacken von Backwaren, **dadurch gekennzeichnet**, daß zunächst in die Verpackung, ggf. auf einem gesonderten mechanischen Träger fixiert, die erste Reaktionskomponente eingebracht wird und die zweite Komponente erst kurzfristig vor dem Verpacken hinzugefügt wird, wobei vorzugsweise das Verpacken zusätzlich in Anwesenheit eines Inertgases, insbesondere von Stickstoff oder Kohlendioxid als Schutzgas, erfolgt.

2. Verfahren nach Anspruch 1, **dadurch gekennzeichnet**, daß die erste Komponente als Schicht aufgebracht wird und die zweite Komponente später, vorzugsweise durch Aufsprühen oder Aufkleben als zweite Schicht, mit der ersten in Kontakt gebracht wird.

3. Verfahren nach Anspruch 1 oder 2, **dadurch gekennzeichnet**, daß eine Pufferlösung eingebracht wird wobei, vorzugsweise unter Verwendung eines Azetatpuffers, ein pH-Wert zwischen 4 und 7,5 eingestellt wird und/oder Glucose zu Glucose-Oxidase auf ein Gewichtsverhältnis größer 1:1, bevorzugt auf ein Verhältnis 2:1, eingestellt wird.

4. Verfahren nach Anspruch 1, 2 oder 3, **dadurch gekennzeichnet**, daß in die Verpackung 4 bis 8 mg pro 100 ml Verpackungsvolumen an Gesamtgewicht von Glucose und Oxidase dosiert eingebracht wird, insbesondere zwischen 5 und 7 mg pro 100 ml.

5. Vererfahren nach Anspruch 1, 2, 3 oder 4, **dadurch gekennzeichnet**, daß die Lebensmittel mit einer Eigentemperatur zwischen 25 und 35°C verpackt werden und danach auf Umgebungstemperatur abkühlen und/oder die Lebensmittel mit einer Restfeuchte verpackt werden, die in der Atmosphäre der Verpackung ein Feuchtegleichgewicht von größer als 70% relativer Feuchte einstellt.

6. Verfahren nach Anspruch 1, 2, 3, 4 oder 5, **dadurch gekennzeichnet**, daß als Substrat Glucosesyrup, bevorzugt mit einer β-D-Glucose verwendet wird und/oder als Oxidase Enzyme des Aspergillus-niger verwendet werden.

7. Verfahren nach Anspruch 1, 2, 3, 4, 5 oder 6, **dadurch gekennzeichnet**, daß die Schicht mittels eines Schichtenbildenden Dickungsmittels, vorzugsweise ein Hydrokoloid, insbesondere ein Alginat, aufgebracht wird und/oder mit der Schicht ein Anteil an Carbonaten eingebracht wird.

8. Verpackungsmaterial, das zur Aufnahme eines Reaktionssystems aus den Komponenten Glucose und Oxidase vorgesehen ist, **dadurch gekennzeichnet,** daß es eine Komponente des Reaktionssystems als Schicht auf einem Träger aufweist.

9. Verpackungsmaterial nach Anspruch 8, **dadurch gekennzeichnet**, daß die Schicht einen ph-Wert zwischen 4 und 7,5, vorzugsweise zwischen 5,5 und 6,5, aufweist und/oder der Anteil an Glucose-Oxidase in der Schicht ein Verhältnis zum Volumen der Verpackung aufweist, das zwischen 4 bis 8 mg insbesondere 5 bis 7 mg pro 100 ml Volumen beträgt und/oder die Schicht ein Dickungsmittel enthält, vorzugsweise Hydrokoloid, insbesondere ein Alginat.

10. Verpackungsmaterial nach Anspruch 8 oder 9, **dadurch gekennzeichnet**, daß die Schicht einen Farbindikator enthält, der das Erreichen der Haltbarkeitsgrenze durch Farbwechsel anzeigt.

11. Verpackungsmaterial nach Anspruche 8,9 oder 10, **dadurch gekennzeichnet**, daß die Glucose-Oxidase enthaltende Schicht mit einer sauerstoffdurchlässigen Folie abgedeckt ist.

12. Verpackungsmaterial nach einem oder mehreren der vorhergehenden Ansprüche 8 bis 11, **dadurch gekennzeichnet**, daß die Schicht eine Dicke zwischen 50 µm und 200 µm aufweist.

## Claims

1. Method of packaging solid foodstuffs which improves their storage life and quality by utilizing a reaction between the components, glucose and oxydase, in particular of packaging bread, cakes and pastries, characterized in that first the first reaction component, possibly fixed on a separate mechanical carrier, is introduced into the packaging and the second component is not added until shortly before packaging, with packaging preferably additionally being effected in the presence of an inert gas, in particular nitrogen or carbon dioxide, as a protective gas.

2. Method according to claim 1, characterized in that the first component is applied as a layer and the second component is later brought into contact with the first component, preferably as a result of being sprayed or pasted as a second layer thereon.

3. Method according to claim 1 or 2, characterized in that a buffer solution is introduced and, preferably using an acetate buffer, a pH value between 4 and 7.5 is adjusted and/or glucose to glucose oxydase is adjusted to a ratio of the weight greater than 1:1, preferably to a ratio of 2:1.

4. Method according to claim 1, 2 or 3, characterized in that 4 to 8 mg per 100 ml packaging volume of the total weight of glucose and oxydase are introduced in a dosed manner into the packaging, in particular between 5 and 7 mg per 100 ml.

5. Method according to claim 1, 2, 3 or 4, characterized in that the foodstuffs are packaged at a characteristic temperature between 25 and 35°C and then cool to ambient temperature and/or the foodstuffs are packaged with a residual moisture which, in the packaging atmosphere, establishes a moisture equilibrium of more than 70% relative humidity.

6. Method according to claim 1, 2, 3, 4 or 5, characterized in that glucose syrup, preferably with a β-D-glucose, is used as a substrate and/or enzymes of Aspergillus niger are used as an oxydase.

7. Method according to claim 1, 2, 3, 4, 5 or 6, characterized in that the layer is applied with the aid of a layer-forming thickening agent, preferably a hydrocolloid, in particular an alginate, and/or a carbonate fraction is introduced with the layer.

8. Packaging material provided for receiving a reaction system comprising the components, glucose and oxydase, characterized in that it has one component of the reaction system as a layer on a substrate.

9. Packaging material according to claim 8, characterized in that the layer has a pH value between 4 and 7.5, preferably between 5.5 and 6.5, and/or the glucose-oxydase fraction in the layer has a ratio to the volume of the packaging which is between 4 to 8 mg, in particular 5 to 7 mg per 100 ml volume and/or the layer contains a thickening agent, preferably hydrocolloid, in particular an alginate.

10. Packaging material according to claim 8 or 9, characterized in that the layer includes a colour indicator which indicates the end of the shelf life by changing colour.

11. Packaging material according to claim 8, 9 or 10, characterized in that the layer containing glucose-oxydase is covered by an oxygen-permeable film.

12. Packaging material according to one or more of the preceding claims 8 to 11, characterized in that the layer has a thickness of between 50 and 200 µm.

## Revendications

1. Procédé d'emballage de produits alimentaires stables avec conservabilité et qualité améliorée par l'utilisation d'une réaction entre les composants glucose et oxydase, en particulier pour l'emballage de pain et de pâtisserie, procédé caractérisé en ce que tout d'abord avant l'emballage on introduit le premier composant de la réaction, éventuellement fixé sur un support mécanique séparé et le second composant de la réaction est ajouté juste un court instant avant l'emballage qui a lieu de préférence additionnellement en présence d'un gaz inerte, en particulier de l'azote ou du dioxyde de carbone, comme gaz protecteur.

2. Procédé selon la revendication 1, caractérisé en ce que le premier composant est appliqué en couche et le deuxième composant est mis en contact ultérieurement avec le premier comme deuxième couche, de préférence par pulvérisation ou collage.

3. Procédé selon les revendications 1 ou 2, caractérisé en ce qu'une solution tampon est appliquée, avec laquelle de préférence on ajuste une valeur de pH comprise entre 4 et 7,5 par usage d'un tampon d'acétate et/ou on ajuste un rapport de poids entre glucose et oxydase de glucose supérieur à 1:1, de préférence de 2:1.

4. Procédé selon les revendications 1, 2 ou 3, caractérisé en ce que dans l'emballage on applique en dosant au poids total 4 à 8 mg de glucose et d'oxydase pour 100 ml de volume d'emballage, en particulier entre 5 et 7 mg pour 100 ml.

5. procédé selon les revendications 1, 2, 3 ou 4, caractérisé en ce que les produits alimentaires sont emballés à une température propre comprise entre 25 et 35°C et ensuite sont refroidies à la température ambiante et/ou les produits alimentaires sont emballés avec une humidité résiduelle, qui installe dans l'atmosphère de l'emballage un équilibre d'humidité supérieur à 70 % d'humidité relative.

6. Procédé selon les revendications 1, 2, 3, 4 ou 5, caractérisé en ce que l'on utilise comme substrat du sirop de glucose, de préférence avec du glucose β-D et/ou comme oxydase des enzymes de l'aspergillus-niger.

7. Procédé selon les revendications 1, 2, 3, 4, 5 ou 6, caractérisé en ce que la couche est appliquée au moyen d'un agent épaississeur formateur de couche, de préférence un hydrocoloïde, en particulier un alginate, et/ou on introduit avec la couche une proportion de carbonates.

8. Matériau d'emballage, qui est prévu pour recevoir un système de réaction à partir des composants glucose et oxydase, caractérisé en ce qu'il comporte un composant du système de réaction en couche sur un support.

9. Matériau d'emballage selon la revendication 8, caractérisé en ce que la couche a une valeur de pH comprise entre 5,5 et 6,5 et/ou la proportion d'oxydase et de glucose dans la couche a un rapport par rapport au volume de l'emballage, qui est de 4 à 8 mg, en particulier 5 à 7 mg pour 100 ml de volume et/ou la couche contient un épaississant, de préférence un hydrocoloïde, en particulier un alginate.

10. Matériau d'emballage selon les revendication 8 ou 9, caractérisé en ce que la couche contient un indicateur de couleur, qui indique par changement de couleur que l'on a atteint la limite de conservabilité.

11. Matériau d'emballage selon les revendications 8, 9 ou 10, caractérisé en ce que la couche contenant oxydase et glucose est recouverte d'une feuille perméable à l'oxygène.

12. Matériau d'emballage selon une ou plusieurs des revendications précédentes 8 à 11, caractérisé en ce que la couche a une épaisseur comprise entre 50 µm et 200 µm.
